Europäisches Patentamt

European Patent Office

Office européen des brevets

(11) Publication number: **0 610 701 A1**

# EUROPEAN PATENT APPLICATION

(21) Application number: **94100914.4**

(22) Date of filing: **22.01.94**

(51) Int. Cl.5: **H04N 5/44**

(30) Priority: **08.02.93 FI 930527**

(43) Date of publication of application:
**17.08.94 Bulletin 94/33**

(84) Designated Contracting States:
**DE FR GB IT NL**

(71) Applicant: **NOKIA TECHNOLOGY GmbH**
**Östliche Karl-Friedrich-Strasse 132**
**D-75175 Pforzheim (DE)**

(72) Inventor: **Aho, Outi**
**Vilppulanpolku 16 A 3**
**SF-33720 Tampere (FI)**
Inventor: **Juhola, Janne**
**Arkkitehdinkatu 15 I 3**
**SF-33720 Tampere (FI)**

(54) **Method and circuit arrangement for transforming an interlaced video signal into a non-interlaced video signal or for doubling its field frequency.**

(57) When a digital video signal with the interlace ratio 2:1 is converted into a progressive video signal or into a video signal with the double field frequency new lines are interpolated between the original lines of each received field (t) by using some linear interpolation to generate each new pixel. However, the picture quality is not the best possible, because high frequency information is lost due to the characteristics of the interpolation. The picture can be essentially improved by supplying to a high-pass filter, for each interpolated pixel of the interpolated picture, that pixel ($X_{i,j}$) in the previous original field (t-1) having a position corresponding to the position of the interpolated pixel and the pixels ($X_{i,j-2}$, $X_{i,j+2}$) above and below it. The filtered signal component obtained from the high-pass filter is added as high frequency information ($X_{high}(i,j,t-1)$) to the value of the interpolated pixel, obtained e.g. by averaging.

FIG. 3

The invention relates to a method and a circuit arrangement for converting a digital video signal with the interlace ratio 2:1 into a progressive (interlace ratio 1:1) video signal keeping the field frequency, or into a video signal with a field frequency of 100 Hz keeping the same interlace ratio (2:1). Both conversions require interpolation of new lines. When a picture is conversed into a progressive picture new lines are interpolated between the original lines of each received field using a well-known intra-field interpolation or an inter-field interpolation to generate the new pixels, whereby the number of lines in the resulting transformed field is doubled, but the field frequency is the same as in the received field. Correspondingly, when the field frequency is doubled, completely new fields must be generated, and the lines of these can be interpolated by any known method. In other words, in both transformations new pixels are interpolated from the original pixels.

A video signal according to current standards, such as PAL, SECAM, NTSC, HD-MAC, has an interlace ratio of 2:1 which means that the television picture comprises of two fieldsin which the lines are scanned on the screen in an interlaced fashion. Typical inconveniences of an interlaced scanned picture, such as line drift, line flicker, and internal aliasing of a field picture areas containing motion, cannot be obviated in other ways than converting, the picture into a progressive one. Then the field is same as the frame, and thus the line frequency is the double compared to the original.

It is possible to reduce the flicker of large bright areas, and also the line flicker, by doubling the field frequency. In a 50 Hz system the frequency is thus increased to 100 Hz. Then the field scanning time is 10 ms instead of 20 ms. In this version completely new fields must be interpolated between the received fields. Several interpolation methods have been presented, and any of these can be used with this invention. The principle could be for example that when successive odd fields A and even fields B are received, a new even field A* is interpolated from the original odd field A, and correspondingly a new even field B* is interpolated from the original even field. The fields are displayed successively in the order A, A*, B*, B, and each field is scanned in 10 ms.

Below we discuss in more detail how the picture is transformed into a progressive picture.

When an interlaced video signal is converted into a progressive video signal, a new line must by some means be added between each line of the received field. In the first place missing lines can be interpolated spatially by repeating the lines, in other words the added line is a copy of an earlier received line of the same field. The disadvantage of this is that the resolution decreases in stationary picture areas and that the difference between successive pictures of the picture sequence will be seen as flicker.

The lines can, on the other hand, also be generated so that the missing lines are taken from the previous field. This method could be called field insertion, because the lines of an odd field and an even field in the original frame form the new field. The progressive fields (= frames) to be displayed thus comprise a complete television picture. This line insertion functions optimally in the case of a stationary area of the picture, because the original resolution of the picture is retained. On the other hand it causes motion errors when the picture area contains motion, because the fields are not kept in the correct temporal order.

As a third way we can use line interpolation, where the pixels of the missing line are interpolated from pixels of existing lines. It is possible to use pixels of the same field, whereby this means an intra-field interpolation, or also pixels of other field - usually the previous field -, whereby this means an inter-field interpolation. The simplest intra-field interpolation is line averaging, in which the new line is obtained as the average of the previous and the next original lines. Averaging retains motion quite well, because the samples originate in the same field or they represent the same moment in time. Because low-pass filtering smoothes the diagonal lines and diagonal edges, this does not cause a so called serration. A disadvantage is, however, the loss of the high frequency components caused by the low-pass filtering, whereby the spatial resolution of the picture decreases and flicker may occur in the stationary parts of the picture.

Several interpolation methods have been presented to be used for the transformation from non-interlaced to interlaced. The method presented in the Finnish patent FI-81232 may be mentioned as an example. There the 9 point median filter has as inputs samples from the lines adjacent to the line to be interpolated, one weighted sample from the previous field, and a weighted average. Thus the filter is a non-linear filter containing a linear sub-structure. On a stationary picture area and on a picture area containing motion the filter characteristics can be influenced by varying the weighting factors. Diagonal lines and edges are well retained by the filter. Due to the characteristics of median filtering the corner points may disappear and small text details may flicker. Further there may occur temporal flickering if the filter contains linear sub-structures.

The interpolation can be improved by observing the direction of any edge in the picture and by interpolating in the direction of the edge. The interpolation can be either intra-field or inter-field processing.

Averaging can be used in intra-field interpolation. It results in a low spatial resolution. Non-linear filters can be used in inter-field interpolation. One edge adaptive interpolation method is presented in the Finnish patent application FI-916195. The method, being both motion and edge adaptive, uses for the interpolation the local picture contents, i.e. the lines above and below the line to be interpolated. The interpolation is temporal in the sense that it also utilizes a line of the previous field. The edge detection is based on the addition of absolute difference signals calculated in a 6*3 window, and the mutual size order of their response signals. It is possible to detect the edges in nine directions, which are 26, 34, 45, 64, 90, 116, 135 degrees. The edge detection utilizes the fact, that if a window contains an edge, then the difference of two pixels is very small in the direction of the edge, and correspondingly, very large over the edge. In other words, a minimum response is obtained with a high probability in the direction of the edge.

Motion adaptive and motion compensated interpolation methods utilizing motion detectors have also been proposed. They are complicated, require a large field memory or frame memory, and the result is always impaired by the fact that it is very difficult to obtain reliable motion information in all situations. If the motion information is incorrect, the interpolator selected on the basis of this information will produce an incorrect result, which is clearly visible in the displayed picture.

The disadvantages of the above described known interpolators for converting an interlaced video signal into a non-interlaced one are decreased resolution, flicker due to different reasons, and motion judder. The decreased resolution is the worst disadvantage of linear filters and combined filters including linear and non-linear structures, whereas median filters cause flicker in small picture details. The same disadvantages also partly occur in the interpolation method of doubling the field frequency.

However, the known interpolators for converting an interlaced video signal into a non-interlaced one as well as for doubling the field frequency have their advantages, and therefore it is desirable to find means to improve the interpolated pixel they produce, or either totally or at least substantially to obviate the described disadvantages. This invention presents means to efficiently improve the sharpness and quality of the picture, which is converted into a progressive one or into a picture with the double field frequency. The method is characterized by what is said in claim 1 and the circuit arrangement is characterized by what is said in claim 9.

The invention is based on the realization that the main part of the disadvantages of the known methods are due to the fact, that high frequency components are lost due to different reasons when a new interpolated pixel is generated. High frequency components are lost particularly when the interpolation method is a linear filtering, such as averaging. Now we obtain a sharp picture without flicker when the "missing" frequency information is added to the interpolated pixel by some known method. The high frequency components introduced as added information may be scaled as desired. In some cases the addition of the high frequency components causes too large transitions in the pixel value, which shows as an overemphasized edge, and therefore a preferred embodiment of the invention provides, at the time of the interpolation a special intra-field examination, on the basis of which it is decided how high percentage of the high frequency information is added. The frequency information to be added is obtained by high-pass filtering in the previously received interlaced field.

The invention is described below and illustrated schematically by the enclosed figures, in which

figure 1          shows the principle of converting an interlaced picture into a progressive one using intra-field interpolation;

figure 2          shows the principle of doubling the field frequency using intra-field interpolation;

figure 3          shows the principle of generating the high frequency component;

figures 4A - 4E   illustrate the problem when interpolating adjacent to an edge;

figure 5          shows the principle of edge detection:

figure 6          is a block diagram of the circuit arrangement of one embodiment; and

figure 7          is a block diagram of the circuit arrangement of another embodiment.

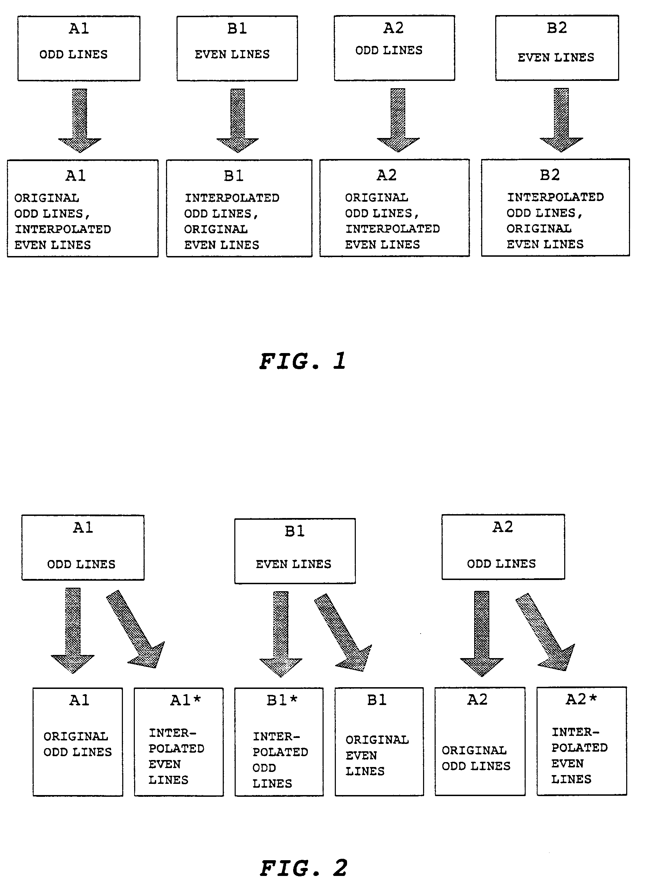

The upper line of figure 1 shows four successive received fields: an odd field A1, an even field B1, an odd field A2 and an even field B2. The fields A1 and B1 form one interlaced scanned frame in the same way as the fields A2 and B2. When the field frequency is 50 Hz the field duration is 20 ms, and thus the total duration of a picture is 40 ms. A progressive frame represented by the lower blocks A1, B1, A2 and B2 is in this example formed by interpolation, so that even lines are interpolated between the lines of the fields, e.g. between the original odd lines of field A1. The interpolator is preferably an averaging filter, whereby the new pixel of an even line is the average of the original pixels above and below. The progressive field A1, thus being identical to the frame, is scanned during 20 ms. The number of lines and thus the line frequency is doubled. The progressive pictures B1, A2, B2, etc. are generated in the corresponding way. The above described is the known principle of progressive conversion, and it must be noted that this invention does not restrict the way in which new lines are interpolated, though vertical averaging is the preferred embodiment.

In figure 2 showing the known principle of doubling the field frequency the upper row shows four consecutive received fields, in a corresponding way as in figure 1, an odd field A1, an even field B1, and an odd field A2. When the field frequency is 50 Hz the field duration is 20 ms. The lower blocks A1, A1*, B1*, B1, A2 and A2* representing a 100 Hz signal contain totally new fields A1*, B1* and A2*. They are formed in this example by intra-field interpolation so that between the lines of the fields, e.g. between the original odd lines of field A1, even lines are interpolated displayed as a field of their own. The interpolator is preferably an averaging filter, whereby the new pixel of an even line is the average of the original pixels above and below. The odd field A1 and the generated even field A1* are scanned during 20 ms, whereby the duration of one field is 10 ms. Thus the field frequency is doubled. The above presented doubling of the field frequency is known, and it must be noted that this invention does not restrict the way in which new lines are interpolated.

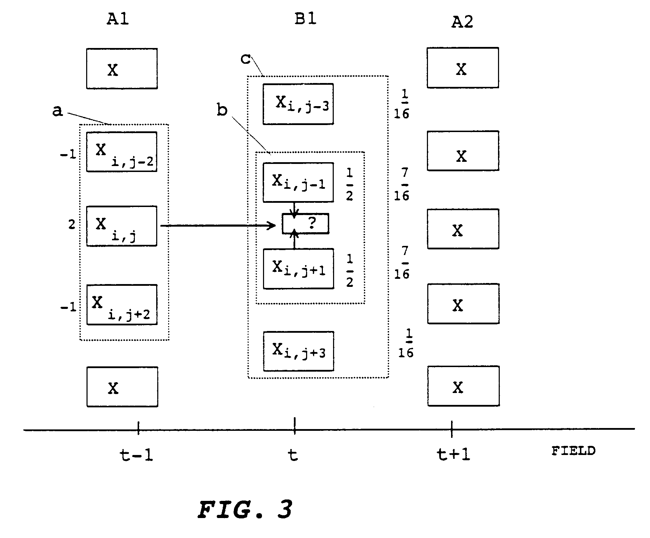

Now we refer to figure 3. It shows a part of three temporally successive original interlaced video signal fields t-1, t and t + 1, which as above are marked as A1 (odd field), B1 (even field) and A2 (odd field). The pixels are marked by rectangles containing the character X. Further those pixels are indexed which are included in the discussion below . The same indexing is used through the following text. The pixels in each field belong to different lines, but they are on the same vertical line. In the illustration a field is thus represented by a vertical "slice" having a width of one pixel. When the picture is transformed into a progressive one, then between the even lines of field t (B1) we interpolate odd lines, of which one pixel of one line to be interpolated is marked in the figurewith a rectangle containing a question mark. The interpolation can be made simply by giving the pixel marked with a rectangle a value which is the average of the previous line original pixel $X_{i,j-1}$ and the next line original pixel $X_{i,j+1}$ at the same horizontal position, i.e. by summing these pixels weighted by the factor 1/2. The weighting factors are marked next to the rectangle b at the respective pixel. Thus the figure 3 shows the pixels to be included in the intra-field interpolation as enclosed by a broken line rectangle b, the arrows showing the interpolation direction (vertical interpolation) and the starting points of the arrows being the pixels to be included in the averaging. The averaging filter can be symbolized by $[1/2 \ 1/2]^T$.

When the field frequency is doubled we proceed as above, except that the interpolated pixels form a field of their own, which is scanned in an interlaced fashion with field B1. Thus it has to be emphasized that the description below also applies to this embodiment.

Of course it is possible to calculate the pixel to be interpolated from a larger set of pixels on the same vertical line. Thus we can include two known pixels $X_{i,j-3}$, $X_{i,j-1}$ above the interpolated pixel (= the question mark) and two known pixels $X_{i,j+1}$, $X_{i,j+3}$ below it. The pixels included are in figure 2 enclosed in a broken line rectangle c, and the weighting values used in summing the known pixels could be e.g. 1/16, 7/16, 7/16 and 1/16, as is written next to the rectangle at the respective pixel. The immediately adjacent pixels are strongly emphasized in the summing, and thus the averaging linear filter could be represented as $[1/16 \ 7/16 \ 7/16 \ 1/16]^T$.

According to the invention high frequency information is added to the average obtained above. This is represented by the arrow from the previous original field t-1 (A1). The information is thus obtained from the previous original field A1 by high-pass filtering a pixel set including that pixel, which in the interlaced frame would be scanned over the position of the pixel to be interpolated, and the immediately adjacent pixels above and below. The pixels included from the field t-1 are indexed and enclosed by the broken line a in figure 2. The middle pixel $X_{i,j}$ is weighted e.g. by the factor 2, and the adjacent pixels $X_{i,j-2}$ and $X_{i,j+2}$ are weighted e.g. by the factor -1. The weighting factors are written next to the respective pixel on its left side. Then the high-pass filter can be represented as $[-1 \ 2 \ -1]^T$. Then the obtained high-pass filtered value is scaled by dividing it e.g. by the number 4 and by limiting the value to 8 bits, whereby the gray scale value is between -128...128. The scaling ensures that the high-pass filtered value does not cause too large pixel value displacements when it is added to the interpolated pixel value.

The high-pass filtered high frequency information obtained from the previous field t-1 is then added to the interpolated pixel value of field t. It is obvious that also a different set neighboring the pixel $X_{i,j}$ could be considered when the high frequency component is calculated and a suitable filter is used, and the limiting could be different from the limiting to 8 bits.

The inventive principle could also be expressed by the equation

$X_{interp}(i,j,t)$ = [a pixel interpolated by any known means] + $X_{high}(i,j,t-1)$

If the known means is averaging, then the equation can be written as

4

$$X_{interp}(i,j,t) = 1/2 [X(i,j-1,t) + X(1,j+1,t)] + X_{high}(i,j,t-1)$$

In the equations

$X_{interp}(i,j,t)$ is the pixel to be interpolated

$X(i,j,t)$ is the i:th pixel of line j in field t

$X_{high}(i,j,t-1)$ is the component obtained from the previous field by high-pass filtering.

The above described method is indeed suitable to be used as such, but it is advantageous to improve it by an added feature: if the transition is very large, e.g. on teletext pages with light text on dark background, there occurs overshooting when a high frequency component is simply added to the pixel value. The overshooting is clearly visible in the picture because it is located at a distance of one line from the true edge. The overshooting is caused by the high-pass filtered component, which is obtained from the previous field and has a high value at a pronounced edge.

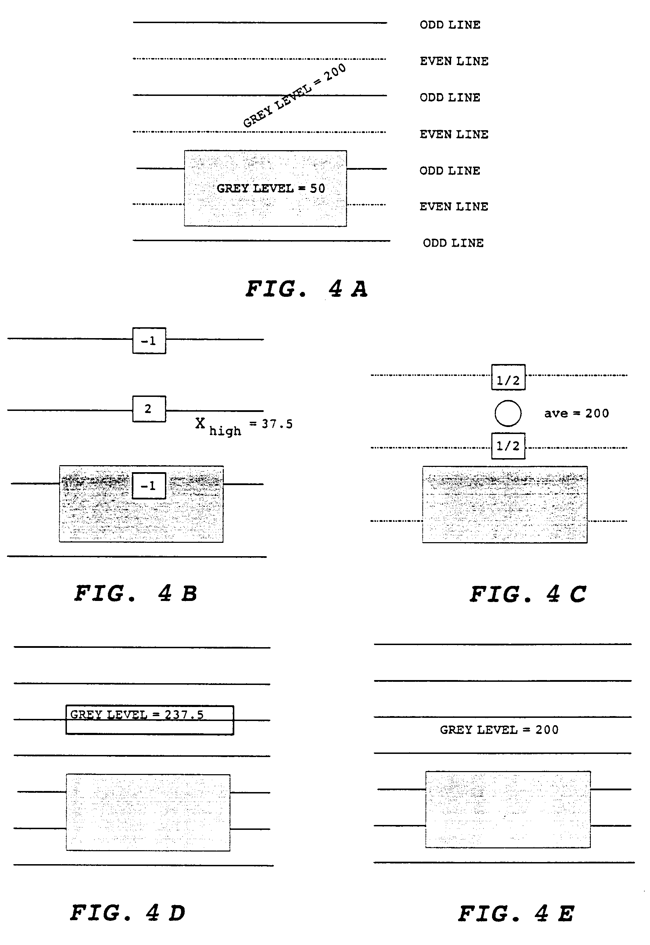

This is illustrated in figures 4A - 4E. Figure 4A shows the original complete picture. The even lines are marked by broken lines and the odd ones by solid lines. The gray level of the darkened area is 50, whereas the gray level of the surrounding area is 200. The darkened area could be a light character on a dark background.

Figure 4B presents a field, from which the added high frequency information is calculated, and shows that with the method according to the invention and using the high-pass filter $[-1 \ 2 \ -1]^T$ the value of the added high frequency component before scaling would be 150 (= -200 + 400 - 50). In the scaling this value is divided by four, whereby the added scaled component $X_{high}(i,j,t-1)$ has the value 37,5 as marked in figure 4B.

Figure 4C shows an odd field, in which new lines have to be interpolated between the lines. One pixel to be interpolated is marked by a circle. Using averaging as the linear interpolation we obtain from the two adjacent pixels the interpolated pixel value 200. When we add to this value the high frequency information 37,5 obtained from the previous field, figure 4B, the resulting pixel value is 237,5. The result is shown in figure 4D, and we can see that in the progressive picture above the darkened area there appears a line which is discernible as clearly darker than its environment. Thus the straightforward use of the invention in this case gives an incorrect result. The correct result should be according to figure 4E, where the pixels of the interpolated line should have a value of 200 like the known pixels around it. Thus the area should be plain.

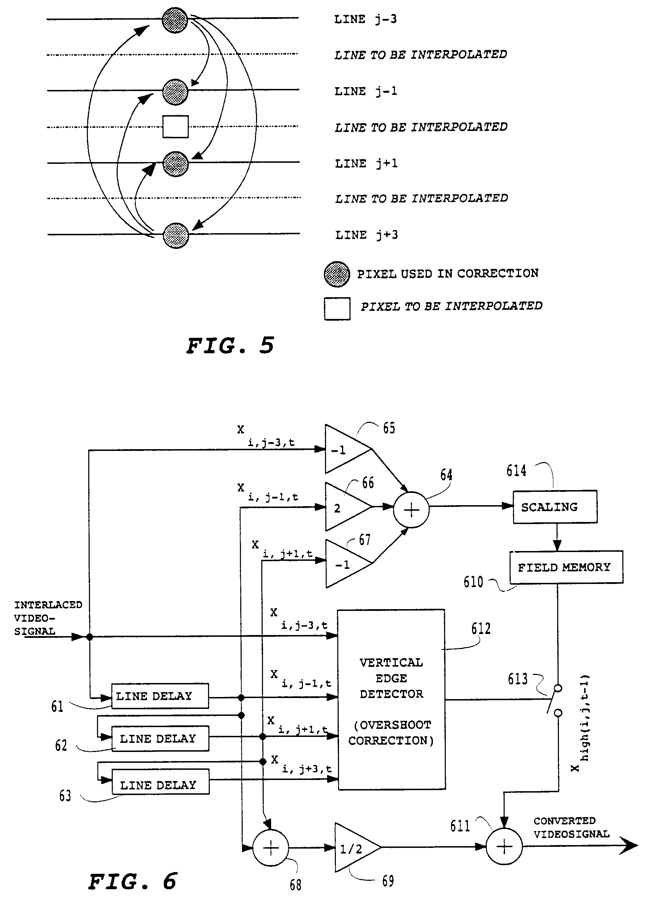

The overshooting of the pixel value shown in figure 4D can be eliminated by intra-field correction. In the correction we examine at least two pixels above and below the interpolated pixel. The situation is presented in figure 5. In this figure the original lines are shown as solid lines and the interpolated lines as broken lines, in the middle of which an interpolated pixel is shown by a rectangle. The differences of the original pixels (a dark circle) above and below it are calculated in pairs, so that first the top pixel is compared with each pixel below. If the absolute value of each difference is greater than a certain threshold value, then we interpret this as a crossing of a horizontal edge located between the lines j-3 and j-1. Then we know that the "overshooting" effect is probable, so that the high frequency components can not be added with their full value to the interpolated pixel value, but according to desired criteria only a part of the value is added or there is no addition at all.

If the differences between the top pixel and any of the three pixels below is smaller than the threshold value, then the bottom pixel is compared with each pixel above, figure 5. If the absolute value of each difference is greater than the threshold value, we interpret this as a crossing of a horizontal edge located between the lines j+3 and j+1. Then we know that the "overshooting" effect is probable, so that the high frequency components can not be added to the interpolated pixel value.

The matter according to figure 5 can be presented as conditional formulas:

$$\text{IF} \qquad |X(i,j-3,t) - X(i, j-1,t)| > K_{thresh} \; \text{AND}$$
$$|X(i,j-3,t) - X(i, j+1,t)| > K_{thresh} \, \text{AND}$$
$$|X(i,j-3,t) - X(i, j+3,t)| > K_{thresh}$$
$$\text{OR}$$
$$|X(i,j+3,t) - X(i, j+1,t)| > K_{thresh} \qquad\qquad \text{AND}$$
$$|X(i,j+3,t) - X(i, j-1,t)| > K_{thresh} \, \text{AND}$$
$$|X(i,j+3,t) - X(i, j-3,t)| > K_{thresh}$$

$$\text{THEN}$$
$$X_{high}(i,j,t\text{-}1) = 0$$

The threshold value can be freely selected, but one suitable value is $K_{thresh}$ = 120. In other words, if the change of the gray level is greater than 120, then we interpret there to exist an edge at the respective position and do not add any high frequency component, but use as the interpolated pixel value the value provided by the method in use, e.g. averaging.

Figure 6 shows a circuit arrangement realizing the method according to the invention. Lines of the input interlaced field are supplied to three line memories 61, 62 and 63 connected in a cascade. The outputs of the line memories as well as the in put to the whole arrangement is connected to the inputs of the vertical edge detector circuit 612. At each moment it has as inputs four consecutive pixels of the same field t with the same horizontal position, or the pixels X(i, j-3,t), X(i, j-1 ,t), X(i, j + 1,t) and X(i,j + 3,t). The edge detector circuit 612 examines whether there is an edge between these lines. If there is an edge, then the output signal of circuit 612 opens the switch 613, whereby the high frequency component $X_{high}(i,j,t\text{-}1)$ obtained from the previous field will not be added to the value obtained by interpolation. There may also be a sliding transition. Then the vertical edge detector circuit uses several threshold values, and the scaling of the high frequency component is determined by the threshold value which was exceeded.

The current input pixel and the pixels X(i, j-3,t), X(i, j-1,t) and X(i, j + 1,t) obtained from the line memories 61 and 62 are supplied to a high-pass filter with the filter function $[-1 \; 3 \; 1]^T$. The filter comprises amplifiers 65, 66 and 67 producing the weighting factors -1, 2 and -1, and an adder 64 adding the amplifier outputs. The high frequency component obtained from the filter is scaled in the means 614 and then supplied to the field memory 610. The pixel values X(i,j-1 ,t) and X(i, j + 1,t) are supplied to an interpolator calculating the average and being formed by an adder 68 and an amplifier 69, which has a gain factor of 1/2 and which divides the sum value by two. The result is a pixel of the interpolated line in the progressive picture. In the adder 611 the high-pass filtered component value $X_{high}(i,j,t\text{-}1)$ of the previous field obtained from the field memory 610 is added to this resulting pixel, whereby the output $X_{interp}(i,j,t)$ satisfies the formula:

$$X_{interp}(i,j,t) = 1/2 \, [X(i, j-1,t) + X(i, j+1,t)] + X_{high}(i,j,t\text{-}1)$$

Thus we have here the same formula, which was already presented on page 7. According to the decision information provided by the edge detector circuit 612 the high-pass filtered component value is either added, switch 613 being closed, or not added to the interpolated average.

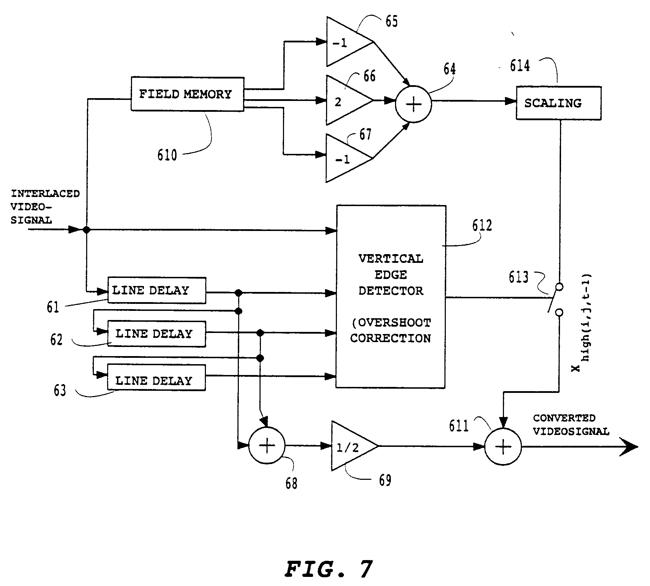

The circuit arrangement can also be realized so that the field memory is connected in front of the high-pass filter. This alternative is shown in figure 7 having reference numerals corresponding to those of figure 6. The received interlaced video signal is supplied to the field memory 610, so that the video signal fills the field memory line by line. Thus it is not necessary to supply lines from the line memories 61, 62 and 63 to the field memory. When the field t is processed, the pixels required for the calculation of the high frequency information of the previous field t-1 are obtained from the field memory 610, from which they are supplied to the high-pass filter 65, 66, 67 and 64, and from there the high frequency information after a possible scaling is added to the value of the interpolated pixel.

The size of the field memory 610 can e.g. in the embodiment of figure 6 be halved so that the signal supplied to it is sub-sampled by two, low-pass filtered and only then stored in the memory. In practice this means that the frequency spectrum of the signal is shifted to lower frequencies. The signal read out from the half-sized field memory can be fully reconstructed without folding, because no data is lost.

Because high-pass filtering usually increases the channel noise, the low-pass interpolator (producing e.g. the average) and the high-pass filter producing the high frequency component must be mutually adapted so that the signal peaking effect caused by the high-pass filter will be as low as possible. The presented method will not amplify noise in plain areas, because the high frequency component is almost zero in these areas. The component is also scaled and limited between the values -128...128, which effectively dampens the peaking.

A very sharp and stable picture in stationary picture areas is obtained by the inventive method. No substantial motion error can be observed in picture areas containing motion. The presented edge detector circuit effectively prevents overshooting close to an edge.

The claims do not place any restrictions on the method, with which new lines are interpolated, even though the best results will be obtained with linear methods, and particularly with intra-field interpolators. In linear intra-field interpolators the method could be directly included in the filter mask, even if the masks of such interpolators are quite large and require large memories. Then the inventive method's foremost advantage - a modest memory requirement and a simple mask - are lost. As an interpolator we can use averaging, which is a simple means, or for example a 9 point median filter according to the patent FI-81232, although the advantage obtained then has proved to be minimal. The only essential thing is that when the pixel has been interpolated, then the high frequency information obtained from the previous field is added to it. In order to obtain the information we have used a high-pass filter having as inputs three pixels of the same horizontal line. Of course the high-pass filter could be expanded so that the input pixel set is larger also in the horizontal direction. However, a disadvantage of expansion is a larger memory and a more complicated circuit. It is also possible to add the high frequency information softly to the picture value. Then the edge detector circuit decides, using e.g. numerous threshold values, how much information is added, or should any addition take place at all. The scaling can be changed proportionally to the amount with which the threshold was exceeded.

The invention was described above mainly concerning the conversion of a picture into a progressive one, but of course the method as such can also be applied to the conversion of an interlaced 50 Hz signal into a non-interlaced 100 Hz signal. In this transformation the interpolated new pixels will form a completely new field instead of locating them between the original lines. The field interpolation is similar to that in the conversion of an interlaced to a progressive one. A high frequency component is added to the interpolated pixels as was described above.

## Claims

1. Method for converting the interlace ratio or the field frequency of a digital video signal with the interlace ratio 2:1, in which method new lines are interpolated between the original lines of each original field (t) using a well-known interpolation to generate each new pixel, whereby a progressive video signal is obtained by placing the new lines alternating with the lines of the original field (t), and a video signal with the double field frequency is obtained by placing the new lines into a field of their own, **characterized** in that
   - for each interpolated pixel a high-pass filter is supplied with that pixel ($X_{i,j}$) in the previous original field (t-1) having a position corresponding to the position of the interpolated pixel and with a number of neighboring pixels,
   - at least a part of the filtered signal components obtained from the high-pass filter are added as high frequency information ($X_{high}(i,j,t-1)$) to the value of the interpolated pixel.

2. The method of claim 1, **characterized** in that the filtered signal component is first scaled.

3. The method of claim 1, **characterized** in that the set of neighboring pixels comprises the immediately adjacent pixels ($X_{i,j-2}$, $X_{i,j+2}$) in the vertical directions.

4. The method of claim 1, **characterized** in that a number of known neighboring pixels of the interpolated pixel are supplied to an edge detector circuit, which examines whether there is a horizontal edge immediately above or below the interpolated pixel, and which, according to the steepness of the edge, decides how large part of the filtered signal component ($X_{high}(i,j,t-1)$) is added to the pixel value.

5. Method according to claim 4, **characterized** in that the edge detector circuit is supplied with two original pixels ($X_{i,j-3}$, $X_{i,j-1}$) above the interpolated pixel and two original pixels ($X_{i,j+1}$, $X_{i,j+3}$), and that the edge detector circuit compares the differences of the pixels to a given threshold value ($K_{thresh}$),

whereby the following holds true for the circuit:

$$IF \quad |X(i,j\text{-}3,t) - X(i, j\text{-}1,t)| > K_{thresh} \quad AND$$
$$|X(i,j\text{-}3,t) - X(i, j\text{+}1,t)| > K_{thresh} \, AND$$
$$|X(i,j\text{-}3,t) - X(i, j\text{+}3,t)| > K_{thresh}$$

$$OR$$
$$|X(i,j\text{+}3,t) - X(i, j\text{+}1,t)| > K_{thresh} \qquad AND$$
$$|X(i,j\text{+}3,t) - X(i, j\text{-}1,t)| > K_{thresh} \, AND$$
$$|X(i,j\text{+}3,t) - X(i, j\text{-}3,t)| > K_{thresh}$$

$$THEN$$
$$X_{high}(i,j,t\text{-}1) = 0$$

6. Method according to claim 2, 4 and 5, **characterized** in that there are several threshold values and that the scaling is determined according to the amount a certain threshold value is exceeded.

7. Method according to claim 1, **characterized** in that the signal containing the high frequency information is sub-sampled by two before supplying it to the field memory, and that the size of the field memory is half of a full-sized memory.

8. Method according to claim 1, **characterized** in that a new pixel is intra-field interpolated using averaging, whereby the interpolated pixel is the average of the original pixels $(X_{i,j-1}, X_{i,j+1})$ immediately above and below it.

9. Circuit arrangement for converting the interlace ratio or the field frequency of a digital video signal with the interlace ratio 2:1 and comprising at least a first (61), a second (62) and a third (63) line memory in cascade and interpolation means providing interpolated pixels to form new lines, which can be placed between the original lines of a received field (t) or into a field of their own, whereby the interlaced input video signal is supplied to the input of the first line memory (61), **characterized** in that it further comprises:
   - a first means comprising at least a high-pass filter (65, 66, 67, 64) and a field memory (610) connected in series and to which pixels of the received field (t) are supplied and whose output provides a high frequency component $(X_{high}(i,j,t\text{-}1))$ for each pixel of the previous received field (t-1),
   - a second means connected to the first means and to said interpolation means, the second means adding to the value of the interpolated pixel a high frequency component $(X_{high}(i,j,t\text{-}1))$ obtained from the first means and connected to a pixel of the previous field (t-1) in a position corresponding to that of the interpolated pixel.

10. Circuit arrangement according to claim 9, **characterized** in that in the first means the field memory (610) is connected behind the high-pass filter (65, 66, 67, 64), whereby the high-pass filter is supplied with the currently received video signal and the delayed video signals obtained from the first (61) and the second (62) line memories.

11. Circuit arrangement according to claim 9, **characterized** in that in the first means the field memory (610) is connected in front of the high-pass filter (65, 66, 67, 64), whereby the high-pass filter is supplied with the currently received video signal.

12. Circuit arrangement according to claim 9, **characterized** in that

- the second means comprises and adding means (611) and a controllable switch (613) between the adding means and the first means,
- the control input of the switch (613) is connected to an edge detector circuit (612) having as inputs the current interlaced video signal and the output signals ($X_{i,j-3,t}$, $X_{i,j-1,t}$, $X_{i,j+1,t}$, $X_{i,j+3,t}$) of at least three line memories (61, 62, 63), whereby the output signal of the edge detector circuit depending on its state controls the controllable switch (613) either to connect the adding means (611) to the first means or to disconnect the adding means from it.

13. Circuit arrangement according to claim 10 or 11, **characterized** in that a scaling means (614) is connected after the high-pass filter to control the level of the component value obtained from the filter.

14. Circuit arrangement according to claim 12, **characterized** in that the edge detector circuit (612) comprises calculation means for comparing the differences of the pixels with a given threshold value ($K_{thresh}$), whereby the following holds true for the circuit:

$$\text{IF} \quad \begin{aligned} & |X(i,j\text{-}3,t) - X(i, j\text{-}1,t)| > K_{thresh} \ \text{AND} \\ & |X(i,j\text{-}3,t) - X(i, j+1,t)| > K_{thresh} \ \text{AND} \\ & |X(i,j\text{-}3,t) - X(i, j+3,t)| > K_{thresh} \end{aligned}$$

$$\text{OR}$$

$$\begin{aligned} & |X(i,j+3,t) - X(i, j+1,t)| > K_{thresh} \qquad \text{AND} \\ & |X(i,j+3,t) - X(i, j\text{-}1,t)| > K_{thresh} \ \text{AND} \\ & |X(i,j+3,t) - X(i, j\text{-}3,t)| > K_{thresh} \end{aligned}$$

$$\text{THEN}$$

$$X_{high}(i,j,t\text{-}1) = 0$$

15. Circuit arrangement according to claims 12 and 13, **characterized** in that the edge detector circuit (612) is also connected to the scaling means (614) whose scaling factor varies in accordance with the control signal supplied by said circuit.

16. Circuit arrangement according to claim 10, **characterized** in that the high-pass filter (65, 66, 67, 64) has as inputs the interlaced video signal and the output signals ($X_{i,j-2}$, $X_{i,j+2}$) of the first (61) and the second (62) line memories, and that the output signal ($X_{i,j}$) of the first line memory (62) is scaled with the factor 2 and the two other output signals ($X_{i,j-2}$, $X_{i,j+2}$) are scaled with the factor -1, whereby the high-pass filter is of the form $[\text{-}1 \ 2 \ \text{-}1]^T$.

17. Circuit arrangement according to claim 9, **characterized** in that the interpolation means for generating new pixels is an averaging intra-field means and comprises a first adder (68) and at least one divider (69) by two, whereby the inputs of the interpolation means are connected the outputs of the first and second line memories and the output is connected to the input of a further adder (611).

18. Circuit arrangement according to claim 9, **characterized** in that in front of the field memory there is connected a sub-sampling means, which sub-samples by two the signal supplied to it, whereby the size of the field memory (610) can be reduced to the half of a full-sized memory.

| A1<br>ODD LINES | B1<br>EVEN LINES | A2<br>ODD LINES | B2<br>EVEN LINES |
|---|---|---|---|

| A1<br><br>ORIGINAL<br>ODD LINES,<br>INTERPOLATED<br>EVEN LINES | B1<br><br>INTERPOLATED<br>ODD LINES,<br>ORIGINAL<br>EVEN LINES | A2<br><br>ORIGINAL<br>ODD LINES,<br>INTERPOLATED<br>EVEN LINES | B2<br><br>INTERPOLATED<br>ODD LINES,<br>ORIGINAL<br>EVEN LINES |
|---|---|---|---|

## FIG. 1

| A1<br>ODD LINES | B1<br>EVEN LINES | A2<br>ODD LINES |
|---|---|---|

| A1<br><br>ORIGINAL<br>ODD LINES | A1*<br><br>INTER-<br>POLATED<br>EVEN<br>LINES | B1*<br><br>INTER-<br>POLATED<br>ODD<br>LINES | B1<br><br>ORIGINAL<br>EVEN<br>LINES | A2<br><br>ORIGINAL<br>ODD LINES | A2*<br><br>INTER-<br>POLATED<br>EVEN<br>LINES |
|---|---|---|---|---|---|

## FIG. 2

10

**FIG. 3**

ODD LINE

EVEN LINE

GREY LEVEL = 200

ODD LINE

EVEN LINE

ODD LINE

GREY LEVEL = 50

EVEN LINE

ODD LINE

## FIG. 4 A

-1

2

$X_{high} = 37.5$

-1

## FIG. 4 B

1/2

ave = 200

1/2

## FIG. 4 C

GREY LEVEL = 237.5

## FIG. 4 D

GREY LEVEL = 200

## FIG. 4 E

**FIG. 5**

LINE j-3

*LINE TO BE INTERPOLATED*

LINE j-1

*LINE TO BE INTERPOLATED*

LINE j+1

*LINE TO BE INTERPOLATED*

LINE j+3

PIXEL USED IN CORRECTION

*PIXEL TO BE INTERPOLATED*

**FIG. 6**

FIG. 7

14

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | PATENT ABSTRACTS OF JAPAN vol. 10, no. 42 (E-382)19 February 1986 & JP-A-60 197 082 (SONY) 5 October 1985 * abstract * | 1,3,9 | H04N5/44 |
| A | US-A-5 016 103 (RABII) * column 4, line 65 - column 5, line 19 * * column 4, line 15 - line 39; figure 7 * | 2 | |

TECHNICAL FIELDS
SEARCHED        (Int.Cl.5)

H04N

The present search report has been drawn up for all claims

| Place of search | Date of completion of the search | Examiner |
|---|---|---|
| THE HAGUE | 10 March 1994 | Yvonnet, J |

EPO FORM 1503 03.82 (P04C01)